# EUROPÄISCHE PATENTSCHRIFT

(11) **EP 4 056 465 B1**
(45) Veröffentlichungstag und Bekanntmachung des Hinweises auf die Patenterteilung: **02.09.2026**
(21) Anmeldenummer: 22160816.9
(22) Anmeldetag: 08.03.2022
(51) Int. Cl.: B64C 1/12, B64C 3/26, B64C 21/10

(54) **AERODYNAMISCHER PROFILKÖRPER FÜR LUFTFAHRZEUGE**
AERODYNAMIC PROFILE BODY FOR AIRCRAFT
CORPS PROFILÉ AÉRODYNAMIQUE POUR AÉRONEFS

(30) Priorität: 10.03.2021 DE 102021105806
(43) Veröffentlichungstag der Anmeldung: 14.09.2022
(73) Patentinhaber: Deutsches Zentrum für Luft- und Raumfahrt e.V., 53227 Bonn-Oberkassel (DE)
(72) Erfinder: Ückert, Christian, 21682 Stade (DE); Steffen, Olaf, 22763 Hamburg (DE); Schollerer, Martin, 38106 Braunschweig (DE)
(74) Vertreter: Gramm, Lins & Partner Patent- und Rechtsanwälte PartGmbB

(56) Entgegenhaltungen:
- WO-A1-2010/001008
- US-A- 4 888 451
- US-A- 5 014 934
- US-A- 5 106 037
- US-A1- 2010 320 325

## Beschreibung

Die Erfindung betrifft einem aerodynamischen Profilkörper für Luftfahrzeuge mit einer aerodynamisch umströmbaren Oberfläche.

Im Sinne der vorliegenden Erfindung werden unter dem Begriff eines aerodynamischen Profilkörpers diejenigen Elemente eines Luftfahrzeuges (beispielsweise Flugzeuge die Verkehrsflugzeugen oder Transportflugzeuge sowie Hubschrauber) verstanden, die von dem Rumpf des Luftfahrzeuges abstehend angeordnet sind und bei bestimmungsgemäßen Gebrauch des Luftfahrzeuges durch äußere Luftschichten angeströmt werden, wodurch aerodynamischer Kräfte auf das Luftfahrzeug hervorgerufen werden können. Ein aerodynamischer Profilkörper eines Luftfahrzeuges sind dabei insbesondere Tragflügel bzw. Tragflächen einer Flügelstruktur sowie Leitwerke (beispielsweise Höhenleitwerke, Seitenleitwerke oder Querruder). Bei den Leitwerken wird die aerodynamische Kraft dabei erst beim Außenlenken der Steuerfläche aus der Neutralposition hervorgerufen, wenn die Leitwerke durch eine äußere Luftschicht angeströmt werden. In der Regel werden die aerodynamischen Profilkörper eines Luftfahrzeuges dabei während der Bewegung des Luftfahrzeuges durch den Luftraum durch die äußere Luftschicht angeströmt.

Die Profilflächen solcher aerodynamischen Profilkörper, d. h. die äußere aerodynamisch umströmbare Oberfläche, besitzen grundsätzlich laminare Grenzschicht, die bei heutigen Verkehrsflugzeugen jedoch frühzeitig in turbulente Grenzschichten umschlagen. Eine solche turbulente Grenzschicht weist dabei einen deutlich erhöhten Reibungswiderstand auf als eine laminare Grenzschicht. Durch Formabweichungen in den Profilflächen, wie Lücken, Stufen und Welligkeiten in der Kontur der Profilfläche, wird die Instabilität der Grenzschicht begünstigt, was zu einem frühzeitigen Umschlag von der laminaren Grenzschicht in die turbulente Grenzschicht führt.

Können Formabweichungen nicht vermieden werden, kann je nach Anwendungsfall eine Stufe von bis zu 0,5 mm oder 0,6 mm toleriert werden. Werden Formabweichungen, die größer sind als die zulässigen Werte, im vorderen Bereich der aerodynamischen Profilkörper vermieden, führt dies zu einem späteren Umschlag der Strömung von einer laminaren Grenzschicht in eine turbulente Grenzschicht und somit zu einem erweiterten Bereich der laminaren Profilumströmung. Aufgrund der Tatsache, dass eine laminare Grenzschicht einen geringeren Reibungswiderstand im Flugbetrieb hat als eine turbulente Grenzschicht, kann durch eine möglichst langanhaltende laminare Grenzschicht Treibstoff eingespart werden und somit der Betrieb des Luftfahrzeuges ökonomisch und ökologisch effizienter gestaltet werden.

Eine solche natürliche Laminarhaltung setzt dabei an dem aerodynamischen Profilkörper neben einer störungsfreien Oberfläche, bei der Welligkeiten, Stufen und Spalte sowie Köpfe von Verbindungselementen in der Oberfläche weitgehend vermieden werden, auch eine geeignete Druckverteilung voraus, um einen vorzeitigen Umschlag der laminaren Grenzschichtströmung zu einer turbulenten Grenzschichtströmung zu vermeiden.

Hierneben ist auch die hybride Laminarhaltung bekannt, bei der im vorderen Bereich des aerodynamischen Profilkörpers (im Bereich der Vorderkante) durch eine Porengröße oder geschlitzte aerodynamische Oberfläche die Grenzschicht abgesaugt wird, sodass sich kontinuierlich eine frische Grenzschicht anlegen kann. Durch die aktive Absaugung kann Grenzschicht auch unter bestimmten Bedingungen laminar gehalten werden, bei denen die natürliche Laminarhaltung nicht mehr möglich ist.

Neben diesen strömungscharakteristischen Aspekten eines aerodynamischen Profilkörpers, die grundlegende aerodynamische Eigenschaften des Profilkörpers im des Luftfahrzeuges betreffen, rücken aus ökonomischer und ökologischer Sicht auch wartungsbedingte Aspekte in den Vordergrund, die insbesondere die Reparierbarkeit und Austauschbarkeit einzelner Elemente des Luftfahrzeuges betreffen. Aufgrund der Tatsache, dass der vordere Bereich eines aerodynamischen Profilkörpers eine exponierte Stelle darstellt, die anfällig ist für Schlagschäden, ist es beim Design des Luftfahrzeuges zu berücksichtigen, dass dieser vordere Bereich, insbesondere die Vorderkante des aerodynamischen Profilkörpers, ausgetauscht werden kann. Gerade vor dem Hintergrund der Verwendung von Faserverbundwerkstoffen als äußere und tragende Schichten einer Vorderkante eines aerodynamischen Profilkörpers muss sichergestellt werden, dass eine solche Vorderkante in einem normalen Wartungszyklus (meist über Nacht) durch das Wartungspersonal ausgetauscht werden kann und darüber hinaus nach Abschluss des Austausches der aerodynamischer Profilkörper mit der neuen Vorderkante ebenfalls laminare strömungscharakteristische Eigenschaften aufweist.

Aus der WO 2013/000447 A1 ist die Anbindung einer Flügelvorderkante an die Flügeloberschalle bekannt, bei der die Flügeloberschalle im Verbindungsbereich unter die Flügelvorderkante geschoben wird und dann im Überlappungsbereich die beiden Elemente mithilfe von durch die äußere Oberfläche geführten Bolzen miteinander verbunden werden. Der Verbindungsbereich liegt dabei in einer Nut unterhalb der aerodynamischen Oberfläche und wird nach dem Einbringen der Bolzen mit einer Füllmasse verschlossen, um so eine insgesamt glatte und störungsfreie aerodynamische Oberfläche zu erhalten. Nachteil hierbei ist, dass dieser Methode einen besonders hohen Aufwand für das exakte Auftragen der Füllmasse benötigt. Da marktübliche Füllmassen sowohl bei der Aushärtung als auch bei niedrigen Außentemperaturen, wie sie im Reiseflug von Verkehrsflugzeugen auftreten, stark schrumpfen, ergeben sich unter Flugbedingungen Abweichungen von der gewünschten Sollkontur, die die Erhaltung der laminaren Strömung stören können. Zudem hat es sich in der Praxis gezeigt, dass bei einem Austausch des Bauteils zunächst die Bolzen unter der Füllmasse freizulegen sind, was den Zeitaufwand für den Austausch der Vorderkante deutlich erhöht.

Aus der DE 10 2014 102 117 A1 ist ein Verfahren bekannt, bei dem mithilfe eines Befestigungswinkels, der an dem Vorderholm des Flügelkastens angeordnet wird, die Flügelvorderkante befestigt wird, ohne die äußere Flügeloberschalle unter die Flügelvorderkante führen zu müssen. Auch hier werden Verbindungselemente durch die äußere Oberfläche der Flügelvorderkante geführt, um diese an dem ersten Schenkel des Befestigungswinkels zu befestigen. Die Verbindungselemente werden anschließend durch eine äußere Metallschicht der Flügelvorderkante abgedeckt. Nachteilig hierbei ist, dass ein Austausch der Flügelvorderkante den Zugriff in den Innenraum der Vorderkante benötigt, da der Austausch hierbei durch das Lösen der Befestigung des zweiten Schenkels des Befestigungswinkels am Vorderholm oder durch innenliegende Schrauben der Befestigung des ersten Schenkels erfolgt. Ein Zugriff auf den Innenraum ist jedoch insbesondere bei Leitwerken nicht ohne weiteres gegeben.

Ein ähnliches Verbindungskonzept ist auch aus der DE 10 2015 105 298 A1 bekannt, bei denen jedoch der Befestigungswinkel integral mit der Vorderkante verbunden ist und somit keine Verbindungselemente durch die Oberfläche der Vorderkante geführt werden müssen. Der verbleibende Spalt zwischen den beiden gefügten Bauteilen (Fügespalt) soll dabei auch weiterhin mit einer Füllmasse geschlossen werden. Dieses Verbindungsprinzips setzt ebenfalls darauf, Verbindungselemente ins Innere des Flügels zu verlegen, um Störungen der äußeren Oberfläche zu vermeiden.

Aus der EP 2 445 785 A1 ist eine Verbindung zwischen einer Flügelvorderkante und einem Flügelkasten bekannt, bei dem die Verbindungselemente, die durch die äußere Oberfläche innerhalb einer tiefergesetzten Nut geführt werden, nachträglich durch ein Metallblech bündig mit der aerodynamischen Kontur abgedeckt werden. Fertigungstoleranzen sollen durch die Dicke der Klebstoffmasse ausgeglichen werden. Nachteilig hierbei ist, dass in den Randbereichen des Metallbleches in der Nut ein Fügespalt verbleibt, der durch eine Füllmasse verschlossen werden muss, wenn Störungen für die Aufrechterhaltung einer laminaren Grenzschichtströmung vermieden werden sollen.

Die WO 2010/001008 A1 offenbart die Verkleidung eines Triebwerkseinlasses, wobei hierfür eine Vorderkante an der ringförmigen Verkleidung angeordnet werden soll. Diese Vorderkante wird dabei mit der Struktur der Verkleidung verschraubt. Um Störungen in der äußeren Strömungsoberfläche zu vermeiden, wird vollflächig eine Abdeckung im Bereich der Verbindung aufgeklebt.

Die US 4,888,451 A offenbart ebenfalls die Verbindung zwischen zwei Elementen eines Flügelkörpers, wobei auch hier ein Abdeckelement, dass keine Abdeckfolie ist, im Bereich der Verbindungsanordnung zum Abdecken der Bolzen eingesetzt wird. Dabei wird ein kleiner Spalt überdeckt, wobei an der äußeren Strömungsoberfläche weiterhin ein Spalt verbleibt, der gerade nicht abgedeckt wird.

Die US 5,106,037 A und US 5,014,934 A zeigen eine Abdeckung, die im Bereich der Verbindung zweier Elemente eines Flügelkörpers angeordnet wird und sich dabei sowohl von dem einen Flügelkörper als auch in Richtung des anderen Flügelkörpers erstreckt.

Es ist daher Aufgabe der vorliegenden Erfindung einen verbesserten aerodynamischen Profilkörper für Luftfahrzeuge anzugeben, bei dem die Vorderkante ohne notwendigen Zugriff von innen austauschbar und leicht zu ersetzen ist und darüber hinaus dennoch eine laminare Grenzschichtströmung begünstigt wird.

Die Aufgabe wird mit dem aerodynamischen Profilkörper gemäß Anspruch 1 erfindungsgemäß gelöst. Vorteilhafte Ausgestaltungen der Erfindung finden sich in den entsprechenden Unteransprüchen.

Gemäß Patentanspruch 1 wird ein aerodynamischer Profilkörper für Luftfahrzeuge vorgeschlagen, der eine aerodynamisch umströmbare äußere Oberfläche aufweist. Im bestimmungsgemäßen Gebrauch des Luftfahrzeuges im Luftbetrieb wird die äußere Oberfläche durch die umgebende Außenluft angeströmt und kann so gegebenenfalls aerodynamische Kräfte auf das Luftfahrzeug ausüben. Im Falle eines Tragflügels als aerodynamischer Profilkörper kann durch das Anströmen der äußeren Oberfläche eine Auftriebskraft erzeugt werden.

Gattungsgemäß weist der aerodynamische Profilkörper einen Hauptkörper auf, der eine Hauptkörper-Tragstruktur und eine auf der Hauptkörper-Tragstruktur angeordnete Hauptkörperaußenschicht als Teil der aerodynamisch umströmbaren Oberfläche aufweist. Ein solcher Hauptkörper des aerodynamischen Profilkörpers kann beispielsweise ein Flügelkasten eines Tragflügels oder ein Leitwerkeskasten eines Leitwerkes sein. Der Hauptkörper weist dabei eine Tragstruktur beispielsweise in Form von Rippen und Holmen auf, wobei die Tragstruktur bevorzugt aus einem Faserverbundwerkstoff hergestellt ist. Auf der Tragstruktur des Hauptkörpers ist eine Außenschicht als Teil der aerodynamisch umströmbaren Oberfläche aufgebracht, die auch Außenhaut oder Außenschale genannt wird.

Des Weiteren weist der gattungsgemäße aerodynamische Profilkörper wenigstens einen Vorderkantenkörper auf, der eine Vorderkanten-Tragstruktur und eine auf der Vorderkanten-Tragstruktur aufgebrachte Vorderkantenaußenschicht als Teil der aerodynamisch umströmbaren Oberfläche hat. Bei den Vorderkantenkörper handelt es sich um den vorderen Teil des aerodynamischen Profilkörpers, der in Flugrichtung vor dem Hauptkörper liegt und somit eine exponierte Position einnimmt. Die Tragstruktur der Vorderkante kann dabei ebenfalls aus einem Faserverbundwerkstoff hergestellt sein, wobei die Tragstruktur ebenfalls aus Rippen und Holmen gebildet sein kann. Denkbar sind aber auch Fachwerkstrukturen, welche die nötige Stabilität der Vorderkante bilden. Die Vorderkantenaußenschicht ist dabei auf diese Tragstruktur aufgebracht und bildet somit einen Teil der aerodynamisch umströmbaren Oberfläche, wobei in der Vorderkantenaußenschicht gegebenenfalls eine Perforation vorhanden sein kann, um die Grenzschichtströmung an der Außenschicht absaugen zu können und somit eine hybride Laminarhaltung zu erzielen.

Mithilfe einer Verbindungsanordnung ist der wenigstens eine Vorderkantenkörper an dem Hauptkörper befestigt bzw. befestigbar, wobei hierfür Verbindungselemente im Bereich der Verbindungsanordnung von außen durch die aerodynamisch umströmbare Oberfläche hindurchgeführt und mit im Inneren des Profilkörpers liegenden Gegenstücken zur Befestigung im Eingriff stehen. Solche Verbindungselemente können beispielsweise Schrauben sein, die in ein im Inneren des Profilkörpers angeordneten Gewinde als Gegenstück eingreifen und so eine form- und/oder kraftschlüssige Verbindung bilden. Denkbar sind aber auch Bolzen, die in einen entsprechenden Formschluss als Gegenstück eingreifen. Durch die Verbindungselemente wird der Vorderkantenkörper mit dem Hauptkörper vorwiegend im Formschluss verbunden und aneinander fixiert.

Durch diese Verbindungsanordnung, wie sie gattungsgemäß aus dem Stand der Technik bekannt ist, liegen die Kopfenden der Verbindungselemente in der aerodynamisch umströmbaren Oberfläche und Störungen so die Laminarhaltung der Grenzschicht. Darüber hinaus existiert in der aerodynamisch umströmbaren Oberfläche ein Fügespalt, der sich aus der Anordnung des Vorderkantenkörpers an dem Hauptkörper zwischen der Vorderkantenaußenschicht und der Hauptkörperaußenschicht ausbildet und in Bezug auf die Grenzschichtströmung eine Stufe bildet, an der eine laminare Grenzschicht in eine turbulente Grenzschicht umschlägt.

Dabei ist nun vorgesehen, dass im Bereich der Verbindungsanordnung eine biegesteife Abdeckfolie auf die äußere aerodynamisch umströmbare Oberfläche aufgebracht ist, wobei die durch die aerodynamisch umströmbare Oberfläche hindurchgeführten Verbindungselemente durch die biegesteife Abdeckfolie verdeckt werden und wobei sich die biegesteife Abdeckfolie über den Fügespalt zwischen dem Teil der aerodynamisch umströmbaren Oberfläche des Hauptkörpers und dem Teil der aerodynamisch umströmbaren Oberfläche des Vorderkantenkörpers erstreckt.

Die biegesteife Abdeckfolie überdeckt demnach die Verbindungsanordnung mit den Verbindungselementen sowie den zwischen der Vorderkantenaußenschicht und Hauptkörperaußenschicht entstehenden Fügespalt, wodurch Störungen in der aerodynamisch umströmbaren Oberfläche des Profilkörpers eliminiert werden. Es hat sich gezeigt, dass mittels einer biegesteifen Abdeckfolie, die sowohl die Verbindungselemente als auch den Fügespalt abdeckt, eine natürliche laminare Grenzschichtströmung begünstigt wird und ein vorzeitiger Umschlag in eine turbulente Grenzschichtströmung weitgehend vermieden werden kann.

Die biegesteife Abdeckfolie ist dabei derart ausgebildet, dass sie im Bereich der Verbindungsanordnung einen Teil der aerodynamisch umströmbaren Oberfläche des Profilkörpers bildet. Die biegesteife Abdeckfolie hat demnach eine Fügeseite und eine Außenseite, wobei die biegesteife Abdeckfolie mit der Fügeseite beispielsweise mittels eines Klebstoffes auf die äußere Oberfläche des Profilkörpers im Bereich der Verbindungsanordnung angeordnet wird, während die Außenseite gegenüberliegend einen Teil der äußeren umströmbaren Oberfläche des Profilkörpers bildet.

Erfindungsgemäß ist vorgesehen, dass die Verbindungsanordnung einen keilförmigen Einleger hat, dessen nach außen weisende Oberfläche in Richtung des Fügespaltes nach innen in Richtung Profilkörper abgeschrägt ist. Ein solcher keilförmiger Einleger ist immer dann sinnvoll, wenn entweder die Vorderkantenaußenschicht unter die Hauptkörperaußenschicht oder andersherum geführt ist, um im Bereich der Verbindungsanordnung eine Überlappung der Vorderkantenaußenschicht mit der Hauptkörperaußenschicht zu erzielen. Die Verbindungselemente werden dann sowohl durch die Vorderkantenaußenschicht als auch durch die Hauptkörperaußenschicht geführt und bilden so einen Formschluss dieser beiden Elemente zur Befestigung der Vorderkante an dem Hauptkörper. Durch den keilförmigen Einleger wird der Fügespalt, der durch das Herabsetzen einer der Außenschichten unter die jeweils andere Außenschicht entsteht, verkleinert. Durch das Abschrägen des keilförmigen Einlegers nach innen in Richtung Profilkörper können Fertigungstoleranzen ausgeglichen werden, sodass die biegesteife Abdeckfolie den Fügespalt ohne Ausbildung von Welligkeiten und Stufen für eine prozesssichere Laminarhaltung überdecken kann. Am Fügespalt zwischen dem keilförmigen Einleger und der Außenschicht des entsprechenden Körperelementes (Hauptkörper oder Vorderkantenkörper) entsteht demnach an der nach außen weisenden Oberfläche eine Abstufung, die dann durch die biegesteife Abdeckfolie überdeckt wird.

Erfindungsgemäß ist weiterhin vorgesehen, dass die biegesteife Abdeckfolie mit einem Außenrand des den Fügespalt überspannenden Abschnittes auf die nach außen weisende Oberfläche des keilförmigen Einlegers mit einer Auflagekraft drückt. Hierdurch wird erreicht, dass Dickentoleranzen der Vorderkantenaußenschicht oder der Hauptkörperaußenschicht sowie Fertigungstoleranzen bei der Absatzhöhe des keilförmigen Einlegers durch das Zusammenspiel der wölbungsbedingte Vorspannung der biegesteifen Abdeckfolie sowie der schräg verlaufenden Auflagefläche (nach außenweisende Oberfläche) des keilförmigen Einlegers ausgeglichen werden können. Die wölbungsbedingte Vorspannung der biegesteifen Abdeckfolie gewährleistet, dass die biegesteife Abdeckfolie nicht bereits an der zum Spalt hin liegenden Kante aufliegt, wodurch die biegesteife Abdeckfolie an dieser Kante nach oben gedrückt werden würde und an dem Außenrand (Hinterkante) nicht mehr auffliegen würde.

Mithilfe der vorliegenden Erfindung kann erreicht werden, dass trotz einer Verbindungsanordnung, bei der Verbindungselemente durch die äußere Strömungsoberfläche geführt werden müssen, eine laminare Grenzschichtströmung begünstigt wird, wobei die Zugänglichkeit zu der Verbindungsanordnung weiterhin von außen gegeben ist. Demnach lässt sich die Vorderkante austauschen, ohne dass hierfür ein Zugriff in den Innenraum des Profilkörpers bzw. der Vorderkante nötig ist. Dies ist insbesondere bei Leitwerkskörpern wichtig, da diese in der Regel keine Zugänglichkeit in den Innenraum aufweisen. Mithilfe der vorliegenden Erfindung werden darüber hinaus Füllmassen, wie sie im Stand der Technik in den Fügespalt eingesetzt werden, überflüssig und erleichtert so den Austausch der Vorderkante. Darüber hinaus ist der Gegenstand der vorliegenden Erfindung problemlos mit einer Grenzschichtabsaugung an der Vorderkante kombinierbar, wodurch eine hybride Laminarhaltung prozesssicher erreicht werden kann.

Ein Luftfahrzeug im Sinne der vorliegenden Erfindung ist dabei insbesondere ein selbstangetriebenes Luftfahrzeug bzw. Flugzeug. Derartige motorisierte Flugzeuge erzeugen selbstständig einen Vortrieb durch mindestens ein am Flugzeug angeordnetes Triebwerk, bspw. Motor oder Turbine mit Propeller oder Strahltriebwerke. Ein derartiges Luftfahrzeug kann im Sinne der vorliegenden Erfindung kann dabei bspw. ein Verkehrsflugzeug sein. Verkehrsflugzeuge weisen in der Regel eine maximale Startmasse von mehr als 50 Tonnen und/oder eine Höchstgeschwindigkeit von mehr als 600 km/h auf.

Die biegesteife Abdeckfolie kann dabei auf den Bereich der Verbindungsanordnung aufgeklebt werden. Dabei ist ein Klebstoff zu wählen, der insbesondere eine entsprechende Festigkeit in Bezug auf die möglichen Fluggeschwindigkeiten des Lauffahrzeuges hat und der ggf. die hohen Temperaturunterschiede zwischen Bodenbetrieb und Luftbetrieb aushält. Außerdem sollte der Klebstoff so gewählt werden, dass sich die biegesteife Abdeckfolie durch eine entsprechende Kraft (bspw. Scherkraft oder Abschälkraft) von der Oberfläche im Bereich der Verbindungsanordnung lösen lässt.

Gemäß einer Ausführungsform ist vorgesehen, dass die biegesteife Abdeckfolie im den Fügespalt überspannenden Abschnitt eine wölbungsbedingte Vorspannung in Richtung der aerodynamisch umströmbaren Oberfläche aufweist. Durch die Vorspannung in Richtung der aerodynamisch umströmbaren Oberfläche wird die biegesteife Abdeckfolie beim Überspannen des Fügespaltes auf die dahinterliegende Oberfläche gedrückt, wodurch im Bereich des Fügespaltes ein sanfter Übergang in der äußeren Strömungsoberfläche durch die biegesteife Abdeckfolie realisiert wird.

Gemäß einer Ausführungsform ist vorgesehen, dass die biegesteife Abdeckfolie eine Metallfolie, insbesondere eine Stahl-, Titan- oder Aluminiumfolie, oder eine biegesteife Kunststofffolie ist.

Gemäß einer Ausführungsform ist vorgesehen, dass die biegesteife Abdeckfolie eine Dicke von weniger als 0,6 mm, vorzugsweise nicht mehr als 0,25 mm und besonders vorzugsweise zwischen 0,125 mm und 0,1 mm hat. Hierdurch wird erreicht, dass die auf die äußere Oberfläche aufgebrachte biegesteife Abdeckfolie innerhalb zulässiger Werte für eine laminar umströmbare Oberfläche bleibt und somit keine Stufen oder Kanten erzeugt werden, die einen Umschlag in eine turbulente Grenzschicht begünstigen. Gegebenenfalls kann vorgesehen sein, dass die senkrecht zur Strömungsrichtung liegenden Außenränder bzw. Außenkanten abgeschrägt sind.

Gemäß einer Ausführungsform ist vorgesehen, dass im Bereich der Verbindungsanordnung sich die Hauptkörperaußenschicht und die Vorderkantenaußenschicht überlappen, so dass die Verbindungselemente sowohl durch die Hauptkörperaußenschicht als auch durch die Vorderkantenaußenschicht hindurchgeführt sind. Bevorzugt ist hierbei, dass die Hauptkörperaußenschicht unter die Vorderkantenaußenschicht geführt ist und die Vorderkantenaußenschicht somit mit eine nach innenliegenden Fügeseite auf der äußeren Oberfläche der Hauptkörperaußenschicht aufliegt. Die Hauptkörperaußenschicht ist mit einer innenliegenden Fügeseite wiederum an einem Element der Hauptkörper-Tragstruktur angeordnet, sodass sich eine feste Verbindung ergibt.

Die Erfindung wird anhand der beigefügten Figuren beispielhaft näher erläutert. Es zeigen:
- Figur 1: schematische Darstellung eines Ausschnittes eines aerodynamischen Profilkörpers im Bereich der Verbindungsanordnung;
- Figur 2: Explosionsdarstellung der Figur 1;
- Figur 3: Detailausschnitt des Fügespaltes.

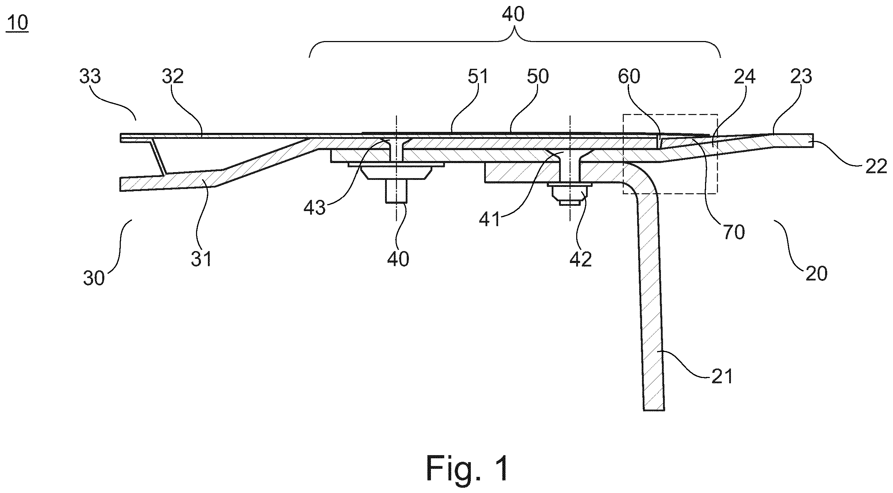

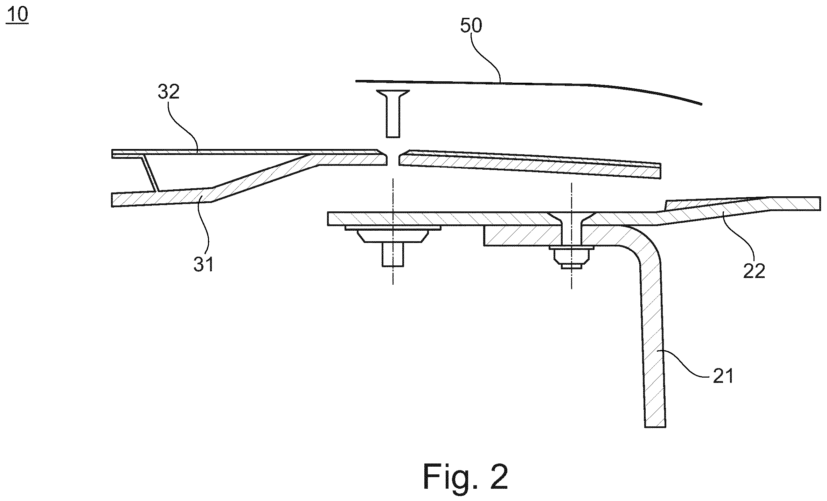

Figur 1 und 2 zeigen einen Ausschnitt eines aerodynamischen Profilkörpers 10 im Bereich der Verbindungsanordnung 40 zwischen dem Hauptkörper 20 und dem Vorderkantenkörper 30. Der Hauptkörper 20 weist eine innenliegende Hauptkörper-Tragstruktur 21 auf, die im Ausführungsbeispiel der Figur 1 und 2 lediglich als Vorderholm dargestellt ist. Der Hauptkörper 20 weist in der Regel jedoch noch weitere Elemente auf, welche die Hauptkörper-Tragstruktur 21 bilden. Des Weiteren weist der Hauptkörper 20 eine an dem Vorderholm 21 befestigte Hauptkörperaußenschicht 22 auf, die im Ausführungsbeispiel der Figur 1 und 2 die Außenschale des Hauptkörpers 20 bildet. Die Hauptkörperaußenschicht 22 hat eine äußere Oberfläche 23, die einen Teil der aerodynamisch umströmbaren Oberfläche des gesamten Profilkörpers 10 bildet.

Des Weiteren weist der Profilkörper 10 eine an dem Hauptkörper 20 befestigte Vorderkante 30 auf, die ähnlich wie der Hauptkörper 20 eine Vorderkanten-Tragstruktur 31 sowie eine Vorderkantenaußenschicht 32 hat. Es ist in den Figuren 1 und 2 angedeutet, dass die Vorderkanten-Tragstruktur 31 fachwerkartig oder wellblechartig ausgebildet ist, wobei die Außenschicht 32 auf dieser Tragstruktur 31 der Vorderkante 30 angeordnet ist. Denkbar sind selbstverständlich aber auch andere Tragstruktur-Konstruktionen und Konstruktionen ohne Grenzschichtabsaugung.

Die Außenschicht 32 der Vorderkante 30 kann dabei perforiert und/oder geschlitzt sein, sodass durch eine nicht dargestellte Absaugeinrichtung die Grenzschichtströmung an der äußeren Oberfläche 33 der Außenschicht 32 abgesaugt und sich somit immer wieder eine neue Grenzschichtströmung ausbilden kann. Hierdurch kann eine Hybridlaminarisierung aus aktiver Grenzschichtabsaugung und natürliche Laminarhaltung realisiert werden. In Kombination mit einer fachwerkartig oder wellblechartig ausgebildeten Vorderkanten-Tragstruktur werden Kammern in der Tragstruktur gebildet, in denen ein Unterdruck anliegt und die mit der Perforation der Außenschicht in Wirkverbindung stehen, so dass die Grenzschicht abgesaugt werden kann.

Im Bereich der Verbindungsanordnung 40 ist die Hauptkörperaußenschicht 22 in Richtung Innenseite des Profilkörpers 10 herabgesetzt und wird so unter die Vorderkantenaußenschicht 32 sowie im Ausführungsbeispiel der Figur 1 und 2 auch unter die Vorderkanten-Tragstruktur 31 geführt. Denn im Bereich der Verbindungsanordnung 40 liegt die Außenschicht 32 direkt an einer Verlängerung der Tragstruktur 31 der Vorderkante 30 an und bildet dabei eine gemeinsame Einheit.

Eine erste Reihe von Verbindungselementen 41 werden dabei im Bereich der Verbindungsanordnung 40 durch die Hauptkörperaußenschicht 22, die unter die Vorderkante 30 geführt ist, und durch einen Schenkel des Vorderholms 21 des Hauptkörpers 20 hindurchgeführt und an einem Gegenstück 42 in Form eines Gewindes befestigt. Das Gewinde 42 ist dabei fest an dem Schenkel des Vorderholms 21 angeordnet, sodass sich die Verbindungselemente 41 form- und kraftschlüssig an dem Gegenstück 42 befestigen lassen. Hierdurch wird erreicht, dass die Außenschale 22 des Hauptkörpers 20 von außen an den dafür vorgesehenen Tragstruktur und des Hauptkörpers 20 befestigt werden kann, dass kein Zugang von innen notwendig ist.

Des Weiteren sind eine zweite Reihe von Verbindungselementen 43 vorgesehen, die durch die Außenschicht 32 der Vorderkante 30 und die unter die Vorderkante 30 geführte Außenschicht 22 des Hauptkörpers 20 geführt sind und mit einem an der Innenseite der Außenschicht 22 des Hauptkörpers 20 angeordneten Gegenstück 44 im Eingriff stehen. Dadurch kann die erste Reihe Verbindungselemente 41 sicher abgedeckt werden, sodass lediglich die Köpfe der zweiten Reihe Verbindungselemente 43 in der äußeren Oberfläche 33 der Außenschicht 32 verbleiben.

Bei dem Gegenstück 44 kann es sich ebenfalls um eine Gewindeanordnung handeln, in welche die zweite Reihe von Verbindungselementen 43 eingeschraubt werden kann. Die Gewindeanordnung 44 ist dabei fest mit dem Hauptkörper 20 verbunden und sichert so eine sichere Befestigung der Vorderkante 30 an dem Hauptkörper 20.

Im Bereich der Verbindungsanordnung 40 ist nunmehr eine biegesteife Abdeckfolie 50 auf die äußere Oberfläche 33 beispielsweise in Form einer Metallfolie aufgebracht, die zumindest die zweite Reihe der Verbindungselemente 43 abdeckt und sich über einen im hinteren Bereich zwischen Vorderkante 30 und Hauptkörper 20 gebildeten Fügespalt 60 erstreckt und diesen abdeckt. Die biegesteife Abdeckfolie weist dabei eine äußere Oberfläche 51 auf, die Teil der aerodynamisch umströmbaren Oberfläche des Profilkörpers 10 wird.

Die Hauptkörperaußenschicht 22 ist dabei im Bereich der Verbindungsanordnung 40 in den Innenraum des Profilkörpers 10 schräg verlaufend angeordnet, um so einen Überlappungsbereich bilden zu können. Um den Fügespalt 60 möglichst klein zu halten, ist ein keilförmiger Einleger 70 vorgesehen, der die nach innen verlaufende Abschrägung 24 der Hauptkörperaußenschicht 22 auffüllen soll. Hierdurch können Fertigungstoleranzen in der Dicke der Vorderkante 30 sowie des Hauptkörpers 20 ausgeglichen werden.

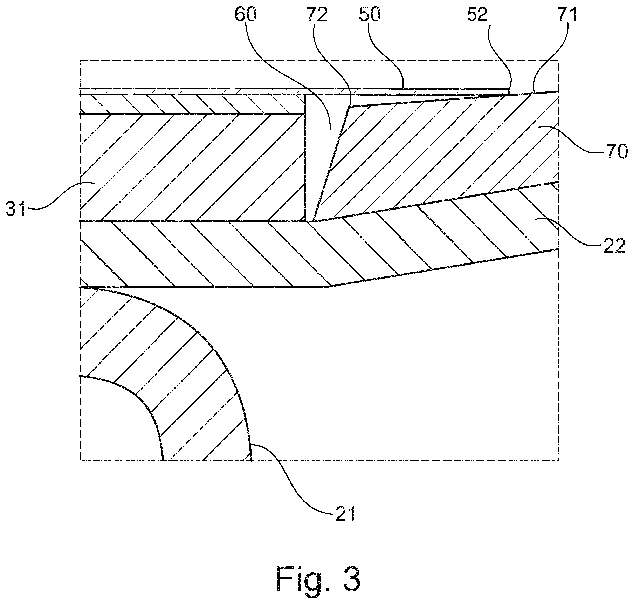

Figur 3 zeigt in einer Detaildarstellung des Bereiches mit den Fügespalt 60. Zu erkennen ist, dass die Auflagefläche 71 des keilförmigen Einlegers 70, welche die nach außen weisende Oberfläche darstellt, in Richtung Innenraum abgeschrägt ist und in Richtung der Vorderkante 30 schräg nach unten verläuft. Hierdurch bildet sich ein Absatz zwischen der Vorderkantenaußenschicht 32 und der Auflagefläche 71 an der vorderen Kante 72 des Fügespaltes 60.

Durch eine wölbungsbedingte Vorspannung der biegesteifen Abdeckfolie wird die hintere Kante 52 der biegesteifen Abdeckfolie 50 auf die tiefergestellte Auflagefläche 71 des keilförmigen Einlegers 70 mit einer Anpresskraft gedrückt, sodass ein weicher und homogener Übergang gebildet wird. Der Fügespalt wird sicher abgedeckt und es verbleiben keine Welligkeiten oder anderweitige Störungen in der äußeren Oberfläche, die einen Umschlag in eine turbulente Grenzschichtströmung begünstigen könnten.

In einer konkreten Anwendung an der Vorderkante eines HLFC (Hybrid Laminar Flow Control) Höhenleitwerkes zeigt sich, dass eine 0,125 mm dickes Stahlband mit einer Vorwölbung mit Radius 150 mm, welches an der Hinterkante der Flügelnasenhaut um 15 mm übersteht, auf einer 30 mm langen und um 2° geneigten schrägen Auflagefläche auch unter der ungünstigsten Konstellation mit einer Linienlast von mindestens 10 N/m aufliegt, auch wenn die Dicke der Vorderkante um ± 0,15 mm und die Höhe der Auflagefläche um ± 0,1 mm variiert.

Die Auflagekraft kann durch Erhöhung der Wölbung (Verringerung des Radius), durch Erhöhung der Dicke der Stahlfolie oder durch Verkürzung des Überhangs vergrößert werden. Dabei ist zu beachten, dass die Möglichkeit zum Ausgleich von Fertigungstoleranzen bei kürzeren Überhang der Folie abnimmt. Die Dicke der Stahlfolie sollte nicht mehr als 0,25 mm betragen, da das Ende der Stahlfolie für die Luftströmung eine nach unten gerichtete Stufe darstellt, die einen Umschlag in eine turbulente Grenzschichtströmung begünstigen kann. Mit zu dünnen Stahlfolien lässt sich keine ausreichend große Auflagekraft erreichen. Eine zu starke Erhöhung der Wölbung der Stahlfolie kann sich als Oberflächen Welligkeiten auswirken, die ebenfalls einen turbulenten Umschlag der Grenzschicht bewirken kann.

Eine zu geringe Auflagekraft kann dazu führen, dass die Stahlfolie zu Schwingungen angeregt wird und im Luftstrom vibriert. Eine unnötig hohe Auflagekraft infolge einer zu starken Wölbung der Folie und/oder einer zu und Steifigkeit (Dicke) der Folie kann zum Abschälen der Verklebung führen.

Aufgrund der enormen Temperaturdifferenzen zwischen Bodenbetrieb und Luftbetrieb können sich aufgrund der unterschiedlich verwendeten Materialien thermische Verformungen im Reiseflug ergeben, die gegebenenfalls bei der Fertigung zu kompensieren sind. Hierbei wird die Struktur nicht in der Sollkontur hergestellt, sondern entgegengesetzt der zu erwartenden thermischen Verformung vorverformt hergestellt. Mit sinkender Umgebungstemperatur nimmt die eingebaute Vorverformung aufgrund des thermischen Verhaltens ab. Dies ist insbesondere dann wichtig, wenn der Profilkörper aus einem Verbund aus metallischen Werkstoffen und Faserverbundwerkstoffen hergestellt ist, da diese grundsätzlich voneinander verschiedenen thermischen Ausdehnungskoeffizienten aufweisen.

### Bezugszeichenliste

- 10: Profilkörper
- 20: Hauptkörper
- 21: Hauptkörper-Tragstruktur
- 22: Hauptkörperaußenschicht
- 23: äußere Oberfläche der Hauptkörperaußenschicht
- 24: Abschrägung der Hauptkörperaußenschicht
- 30: Vorderkantenkörper
- 31: Vorderkanten-Tragstruktur
- 32: Vorderkantenaußenschicht
- 33: äußere Oberfläche der Vorderkantenaußenschicht
- 40: Verbindungsanordnung
- 41: erste Reihe Verbindungselemente
- 42: Gegenstück der ersten Reihe Verbindungselemente
- 43: zweite Reihe Verbindungselemente
- 44: Gegenstück der zweiten Reihe Verbindungselemente
- 50: biegesteife Abdeckfolie
- 51: äußere Oberfläche der biegesteifen Abdeckfolie
- 52: hintere Kante der biegesteifen Abdeckfolie
- 60: Fügespalt
- 70: keilförmige Einleger
- 71: Auflagefläche des keilförmigen Einlegers (äußere Oberfläche)
- 72: vorderen Kante des keilförmigen Einlegers

## Patentansprüche

1. Aerodynamischer Profilkörper (10) für Luftfahrzeuge mit einer aerodynamisch umströmbaren Oberfläche aufweisend:
- einen Hauptkörper (20), der eine Hauptkörper-Tragstruktur (21) und eine auf der Hauptkörper-Tragstruktur (21) angeordnete Hauptkörperaußenschicht (22) als Teil der aerodynamisch umströmbaren Oberfläche aufweist,
- wenigstens einen Vorderkantenkörper (30), der eine Vorderkanten-Tragstruktur (31) und eine auf der Vorderkanten-Tragstruktur (31) aufgebrachte Vorderkantenaußenschicht (32) als Teil der aerodynamisch umströmbaren Oberfläche hat, und
- eine Verbindungsanordnung (40), mit der der wenigstens eine Vorderkantenkörper (30) an dem Hauptkörper (20) befestigt oder befestigbar ist, indem Verbindungselemente im Bereich der Verbindungsanordnung (40) von außen durch die aerodynamisch umströmbare Oberfläche hindurchgeführt und mit im Inneren des Profilkörpers (10) liegenden Gegenstücken zur Befestigung im Eingriff stehen,
wobei
- im Bereich der Verbindungsanordnung (40) eine biegesteife Abdeckfolie (50) auf die äußere, aerodynamisch umströmbare Oberfläche aufgebracht ist,
- die durch die aerodynamisch umströmbare Oberfläche hindurchgeführten Verbindungselemente durch die biegesteife Abdeckfolie (50) verdeckt werden, und
- sich die biegesteife Abdeckfolie (50) über einen Fügespalt (60) zwischen dem Teil der aerodynamisch umströmbaren Oberfläche des Hauptkörpers (20) und dem Teil der aerodynamisch umströmbaren Oberfläche des Vorderkantenkörpers (30) erstreckt,
**dadurch gekennzeichnet,**
- **dass** die Verbindungsanordnung (40) einen keilförmigen Einleger (70) hat, dessen nach außen weisende Oberfläche (71) in Richtung des Fügespaltes (60) nach innen in Richtung Profilkörper (10) abgeschrägt ist, wenn der keilförmige Einleger an dem Profilkörper angeordnet ist, und
- **dass** die biegesteife Abdeckfolie (50) mit einem Außenrand (52) des den Fügespalt (60) überspannenden Abschnittes auf die nach außen weisende Oberfläche (71) des keilförmigen Einlegers (70) mit einer Auflagekraft drückt.

2. Aerodynamischer Profilkörper (10) nach Anspruch 1, **dadurch gekennzeichnet, dass** die biegesteife Abdeckfolie (50) im den Fügespalt (60) überspannenden Abschnitt eine wölbungsbedingte Vorspannung in Richtung der aerodynamisch umströmbaren Oberfläche aufweist.

3. Aerodynamischer Profilkörper (10) nach Anspruch 1 oder 2, **dadurch gekennzeichnet, dass** die biegesteife Abdeckfolie (50) eine Metallfolie, insbesondere eine Stahl-, Titan- oder Aluminiumfolie, oder eine biegesteife Kunststofffolie ist.

4. Aerodynamischer Profilkörper (10) nach einem der vorhergehenden Ansprüche, **dadurch gekennzeichnet, dass** die biegesteife Abdeckfolie (50) eine Dicke von weniger als 0,6 mm, vorzugsweise von weniger als 0,25 mm und besonders vorzugsweise zwischen 0,125 mm und 0,1 mm hat.

5. Aerodynamischer Profilkörper (10) nach einem der vorhergehenden Ansprüche, **dadurch gekennzeichnet, dass** im Bereich der Verbindungsanordnung (40) sich die Hauptkörperaußenschicht (22) und die Vorderkantenaußenschicht (32) überlappen, so dass die Verbindungselemente sowohl durch die Hauptkörperaußenschicht (22) als auch durch die Vorderkantenaußenschicht (32) hindurchgeführt sind.

## Claims

1. An aerodynamic profile body (10) for aircraft, having a surface over which air can flow aerodynamically, comprising:
- a main body (20) comprising a main body support structure (21) and a main body outer layer (22) disposed on the main body support structure (21) as part of the surface over which air can flow aerodynamically,
- at least one leading-edge body (30) having a leading-edge support structure (31) and a leading-edge outer layer (32) applied to the leading-edge support structure (31) as part of the surface over which air can flow aerodynamically, and
- a connecting assembly (40), by means of which the at least one leading-edge body (30) is or can be mount to the main body (20) by passing connecting elements from the outside through the surface over which air can flow aerodynamically in the region of the connecting assembly (40) and engaging them with counterparts located inside the profile body (10) for fastening,
wherein
- in the region of the connecting assembly (40), a rigid cover foil (50) is applied to the surface over which air can flow aerodynamically,
- the connecting elements passed through the surface over which air can flow aerodynamically are covered by the rigid cover foil (50), and
- the rigid cover foil (50) extends across a joint gap (60) between the portion of the surface over which air can flow aerodynamically of the main body (20) and the portion of the surface over which air can flow aerodynamically of the leading-edge body (30),
**characterized in**
- **that** the connecting assembly (40) has a wedge-shaped insert (70), the outward-facing surface (71) of which is chamfered inward toward the profile body (10) in the direction of the joint gap (60) when the wedge-shaped insert is positioned on the profile body, and
- **that** the rigid cover foil (50) presses against the outward-facing surface (71) of the wedge-shaped insert (70) with a contact force via an outer edge (52) of the section spanning the joint gap (60).

2. Aerodynamic profile body (10) according to claim 1, **characterized in that** the rigid covering foil (50) has, in the section spanning the joint gap (60), a curvature-induced preload in the direction of the surface over which airflow can flow aerodynamically.

3. Aerodynamic profile body (10) according to claim 1 or 2, **characterized in that** the rigid covering foil (50) is a metal foil, in particular a steel, titanium, or aluminum foil, or a rigid plastic foil.

4. An aerodynamic profile body (10) according to one of the preceding claims, **characterized in that** the rigid covering foil (50) has a thickness of less than 0.6 mm, preferably less than 0.25 mm, and most preferably between 0.125 mm and 0.1 mm.

5. An aerodynamic profile body (10) according to one of the preceding claims, **characterized in that**, in the region of the connecting assembly (40), the main body outer layer (22) and the leading edge outer layer (32) overlap such that the connecting elements pass through both the main body outer layer (22) and the leading edge outer layer (32).

## Revendications

1. Corps profilé aérodynamique (10) pour aéronefs, présentant une surface à contourner aérodynamiquement, comprenant :
- un corps principal (20) qui présente une structure porteuse de corps principal (21) et une couche extérieure de corps principal (22), disposée sur la structure porteuse de corps principal (21), en tant que partie de la surface à contourner aérodynamiquement,
- au moins un corps de bord d'attaque (30) qui présente une structure porteuse de bord d'attaque (31) et une couche extérieure de bord d'attaque (32), appliquée sur la structure porteuse de bord d'attaque (31), en tant que partie de la surface à contourner aérodynamiquement, et
- un ensemble de liaison (40) par lequel ledit au moins un corps de bord d'attaque (30) est fixé ou peut être fixé au corps principal (20) du fait que, dans la zone de l'ensemble de liaison (40), des éléments de liaison sont menés depuis l'extérieur à travers la surface à contourner aérodynamiquement et viennent en prise avec des contre-pièces de fixation situées à l'intérieur du corps profilé (10),
dans lequel
- dans la zone de l'ensemble de liaison (40), une feuille de recouvrement (50) rigide à la flexion est appliquée sur la surface extérieure à contourner aérodynamiquement,
- les éléments de liaison menés à travers la surface à contourner aérodynamiquement sont recouverts par la feuille de recouvrement (50) rigide à la flexion, et
- la feuille de recouvrement (50) rigide à la flexion s'étend sur un interstice de jonction (60) situé entre la partie de la surface à contourner aérodynamiquement du corps principal (20) et la partie de la surface à contourner aérodynamiquement du corps de bord d'attaque (30),
**caractérisé en ce que**
- l'ensemble de liaison (40) comporte un insert en forme de coin (70) dont la surface (71) tournée vers l'extérieur dans la direction de l'interstice de jonction (60) est biseautée vers l'intérieur en direction du corps profilé (10), lorsque l'insert en forme de coin est disposé sur le corps profilé, et
- par un bord extérieur (52) de la partie recouvrant l'interstice de jonction (60), la feuille de recouvrement (50) rigide à la flexion exerce une force d'appui sur la surface (71), tournée vers l'extérieur, de l'insert en forme de coin (70).

2. Corps profilé aérodynamique (10) selon la revendication 1,
**caractérisé en ce que** la feuille de recouvrement (50) rigide à la flexion présente, dans la partie recouvrant l'interstice de jonction (60), une précontrainte, due à la courbure, en direction de la surface à contourner aérodynamiquement.

3. Corps profilé aérodynamique (10) selon la revendication 1 ou 2,
**caractérisé en ce que** la feuille de recouvrement (50) rigide à la flexion est une feuille métallique, en particulier une feuille d'acier, de titane ou d'aluminium, ou une feuille de plastique rigide à la flexion.

4. Corps profilé aérodynamique (10) selon l'une des revendications précédentes,
**caractérisé en ce que** la feuille de recouvrement (50) rigide à la flexion présente une épaisseur inférieure à 0,6 mm, de préférence inférieure à 0,25 mm et, de manière particulièrement préférée, comprise entre 0,125 mm et 0,1 mm.

5. Corps profilé aérodynamique (10) selon l'une des revendications précédentes,
**caractérisé en ce que**, dans la zone de l'ensemble de liaison (40), la couche extérieure de corps principal (22) et la couche extérieure de bord d'attaque (32) se chevauchent, de sorte que les éléments de liaison sont menés aussi bien à travers la couche extérieure de corps principal (22) qu'à travers la couche extérieure de bord d'attaque (32).
